# EUROPÄISCHE PATENTANMELDUNG

(11) **EP 1 982 765 A1**
(43) Veröffentlichungstag der Anmeldung: **22.10.2008**
(21) Anmeldenummer: 08006908.1
(22) Anmeldetag: 07.04.2008
(51) Int. Cl.: B01J 25/02, B01J 33/00

(54) **Verfahren zur Inertisierung eines sauerstoffempfindlichen Katalysators**

(30) Priorität: 13.04.2007 DE 102007017872
(71) Anmelder: Linde Aktiengesellschaft, 80807 München (DE)
(72) Erfinder: Ehrig, Martin, 51373 Leverkusen (DE); Gerhard, Dirk, 68163 Mannheim (DE); Medved, Mitja, 51375 Leverkusen (DE); Obert, Katharina, 91058 Erlangen (DE); Wasserscheid, Peter, 91054 Erlangen (DE)

(57) **Zusammenfassung**

Die Erfindung betrifft ein Verfahren zur Inertisierung eines sauerstoffempfindlichen heterogenen Katalysators (s-Kat) gegen Sauerstoff sowie einen gegenüber Sauerstoff unempfindlichen heterogenen Katalysator. Die Oberfläche des s-Kat wird mit einer Ionischen Flüssigkeit benetzt. Die fest auf der Katalysatoroberfläche haftende lonische Flüssigkeit bildet einen Film, der den s-Kat vor Reaktionen mit Sauerstoff schützt.

## Beschreibung

Die Erfindung betrifft ein Verfahren zur Inertisierung eines sauerstoffempfindlichen heterogenen Katalysators (s-Kat) gegen Sauerstoff sowie einen gegenüber Sauerstoff unempfindlichen heterogenen Katalysator.

In der chemischen Industrie werden sehr häufig heterogene Katalysatoren eingesetzt, um die Umwandlung von Edukten in bestimmte Produkte zu unterstützen. Die Katalysatoren reduzieren den für die Reaktion notwendigen Energiebedarf. Darüber hinaus steigern sie die Ausbeute der Reaktion, da sie gezielt die Bildung der gewünschten Produkte favorisieren. Als besonders vorteilhaft gelten solche Katalysatoren, die eine hohe katalytische Aktivität besitzen, dabei billig, umweltverträglich, d. h. nicht toxisch und leicht zu handhaben, also beispielsweise nicht selbstentzündlich (pyrophor) sind und darüber hinaus eine große mechanische, thermische und chemische Stabilität aufweisen.

Viele heterogene Katalysatoren, die sich durch ihre hohe katalytische Wirksamkeit bezüglich bestimmter chemischer Reaktionen auszeichnen, zeigen ein ausgeprägtes pyrophores Verhalten; beim Kontakt mit Sauerstoff büßen sie daher rasch ihre Funktionalität ein. Stand der Technik ist es, derartige Katalysatoren durch Passivierung zu deaktivieren und so vor unerwünschten Reaktionen mit Sauerstoff zu schützen. Vor einer Verwendung müssen die deaktivierten Katalysatoren mit erheblichem Aufwand wieder aktiviert werden. Beispiele für Katalysatoren dieser Art sind Eisenkatalysatoren für die Ammoniaksynthese, Eisen-Chrom-Katalysatoren und Kupfer-Zink-Katalysatoren für die Wassergas-Shift-Reaktion.

Am Beispiel des pyrophoren Raney-Nickels soll die Problematik beim Einsatz von sauerstoffempfindlichen Katalysatoren im Folgenden ausführlicher dargestellt werden. Raney-Nickel ist ein heterogener Katalysators, der aus feinen Körnern einer Nickel-Aluminium-Legierung besteht und in der Industrie vorwiegend als Hydrierkatalysator eingesetzt wird, wie etwa bei der Hydrierung von Alkenen, Alkinen, Nitrilen, Carbonyl-, Nitroso- oder Nitroverbindungen. Im Gegensatz zu Hydrierkatalysatoren auf Edelmetallbasis (z. B. Platin-, Palladium-, Ruthenium- oder Rhodiumkatalysatoren), ist Raney-Nickel bei einer vergleichbar hohen katalytischen Aktivität deutlich preisgünstiger. Aus diesem Grund findet es trotz seiner Selbstentzündlichkeit - und der daraus resultierenden aufwendigen Handhabung - vielfach Verwendung.

Auf Grund seiner Selbstentzündlichkeit wird Raney-Nickel üblicher Weise in Wasser aufgeschlämmt verkauft und gelagert. An den feinen Metallpartikeln anhaftendes Wasser erschwert die exakte Dosierung des Katalysators und muss vor der Verwendung, beispielsweise durch Vakuumtrocknung, entfernt werden, um insbesondere beim Einsatz in organischen Lösungsmitteln die Ausbildung mehrerer Flüssigphasen zu verhindern. Nach der Entfernung des Wassers ist es erforderlich, das Raney-Nickel vor seinem Einsatz unter Schutzgas zu lagern und nach seinem Einsatz in inerter Umgebung von Lösungsmitteln und Produkten abzutrennen. Besonders problematisch ist der Einsatz von Raney-Nickel in Verbindung mit leicht entzündlichen, organischen Lösungsmittel.

Aufgabe der vorliegenden Erfindung ist es daher ein Verfahren der eingangs genannten Art anzugeben, durch das ein sauerstoffempfindlicher Katalysator (s-Kat) unproblematischer und mit geringerem Aufwand eingesetzt werden kann, als dies nach dem Standes der Technik möglich ist.

Die gestellte Aufgabe wird verfahrensseitig erfindungsgemäß dadurch gelöst, dass die Oberfläche des s-Kat mit einer Ionischen Flüssigkeit benetzt wird.

Ionische Flüssigkeiten sind niedrigschmelzende organische Salze mit Schmelzpunkten zwischen 100 und -90°C, wobei die meisten der bekannten Ionischen Flüssigkeiten bereits bei Raumtemperatur in flüssiger Form vorliegen. Ionische Flüssigkeiten werden aus positiven (Kationen) und negativen Ionen (Anionen) gebildet, sind jedoch insgesamt ladungsneutral. Sowohl die Anionen als auch die Kationen einer Ionischen Flüssigkeit können von unterschiedlicher Art sein. Sie sind meist einwertig, können aber auch höhere Wertigkeiten aufweisen, weshalb die Anzahl der Anionen nicht notwendig gleich der Anzahl der Kationen ist. Im Gegensatz zu herkömmlichen, molekularen Flüssigkeiten, sind Ionische Flüssigkeiten zur Gänze ionisch und zeigen deshalb neue und ungewöhnliche Eigenschaften. Ionische Flüssigkeiten sind durch die Variation der Struktur von Anion und/oder Kation sowie durch die Variation von deren Kombinationen in ihren Eigenschaften an gegebene technische Problemstellungen vergleichsweise gut anpassbar. So können beispielsweise die Dichte und das Mischungsverhalten mit anderen Stoffen bei Ionischen Flüssigkeiten durch die Wahl der Ionen in weiten Grenzen beeinflusst bzw. eingestellt werden. Aus diesem Grund werden sie oftmals auch als so genannte "Designer Solvents" bezeichnet. Bei herkömmlichen, molekularen Flüssigkeiten ist hingegen lediglich eine Variation der Struktur möglich. Im Gegensatz zu konventionellen, molekularen Flüssigkeiten haben Ionische Flüssigkeiten darüber hinaus den Vorteil, dass sie keinen messbaren Dampfdruck besitzen. Dies bedeutet, dass sie - solange ihre Zersetzungstemperatur, die oftmals oberhalb von 200°C liegt, nicht erreicht wird - selbst im Hochvakuum auch nicht in geringsten Spuren verdampfen.

Aufgrund der ionischen Bindung haftet die Ionische Flüssigkeit auch als extrem dünner Film sehr fest auf der Oberfläche des Katalysators und schützt diese vor Reaktionen mit Sauerstoff. Diese Schutzwirkung bleibt auch bei höheren Temperaturen (z. B. 200°C) erhalten. Durch die Erfindung ist es möglich, einen Katalysator, der aufgrund seiner Sauerstoffempfindlichkeit nur schwer handhabbar ist, in eine leichter anzuwendende Form zu überführen, die auch über einen längern Zeitraum problemlos in luftoffenen Systemen gelagert werden kann. Darüber hinaus verringert sich durch die erfindungsgemäße Inertisierung die Tendenz zur Deaktivierung des Katalysators, weshalb dieser über einen längeren Zeitraum einsatzfähig bleibt.

Um die Benetzung der Oberfläche des s-Kat zu erreichen, wird zweckmäßiger Weise der s-Kat in der Ionischen Flüssigkeit aufgeschlämmt. Durch Abfiltrieren von überschüssiger Ionischer Flüssigkeit, erhält man einen Katalysator, dessen Oberfläche mit einem Film aus Ionischer Flüssigkeit überzogen ist, der den s-Kat vor unerwünschten Reaktionen mit Sauerstoff schützt.

Das erfindungsgemäße Verfahren ist dazu geeignet, alle möglichen sauerstoffempfindlichen heterogenen Katalysatoren gegen Reaktionen mit Sauerstoff zu inertisieren. Bevorzugt wir es jedoch zur Inertisierung von selbstentzündlichen (pyrophoren) und/oder metallbasierten s-Kats eingesetzt.

Wie sich herausstellte, kann das erfindungsgemäße Verfahren besonders vorteilhaft zur Inertisierung von Raney-Nickel angewendet werden.

Wie die Erfahrung zeigt, haben Ionische Flüssigkeiten keinen oder nur einen geringen Einfluss auf die katalytische Aktivität des s-Kats. Daher kann ein durch die erfindungsgemäße Inertisierung aus einem s-Kat erzeugter Katalysator in den gleichen Reaktionen eingesetzt werden, wie der s-Kat selbst.

Sofern geeignete Bedingungen bei einer Reaktion gewählt werden, die von der Art des s-Kats, der zu Inertisierung verwendeten Ionischen Flüssigkeit sowie den bei der Reaktion eingesetzten Lösungsmitteln abhängen, bleibt die Ionische Flüssigkeit auf der Oberfläche des s-Kats haften und benetzt diese auch noch nach dem Ende der Reaktion. In diesen Fällen kann der inertisierte Katalysator von dem Lösungsmittel und den Produkten abgetrennt, evtl. zwischengelagert und bei einer neuen Reaktion wieder eingesetzt werden.

Vorzugsweise werden zur Durchführung des erfindungsgemäßen Verfahrens Ionische Flüssigkeiten eingesetzt, die aus der Menge der im Unteranspruch 6 charakterisierten Ionischen Flüssigkeiten gewählt werden. Besonders bevorzugt wird zur Durchführung des erfindungsgemäßen Verfahrens eine Ionische Flüssigkeit eingesetzt, die Bistrifluoromethylsulfonylimid als Anion aufweist, wie beispielsweise 1-Butyl-3-methylimidazolium bistrifluoromethylsulfonylimid ([BMIM][NTf₂]).

Weiterhin betrifft die Erfindung einen heterogenen, gegenüber Sauerstoff unempfindlichen Katalysator.

Der beanspruchte Katalysator zeichnet sich dadurch aus, dass er aus einem sauerstoffempfindlichen heterogenen Katalysator (s-Kat) besteht, dessen Oberfläche mit einer Ionischen Flüssigkeit benetzt ist.

Vorzugsweise handelt es sich bei dem s-Kat um einen selbstentzündlichen (pyrophoren) und/oder metallbasierten Katalysator, beispielsweise um Raney-Nickel, das sich in der Praxis als besonders geeignet erwiesen hat.

Bei der zur Benetzung der Oberfläche des s-Kats verwendeten Ionischen Flüssigkeit handelt es sich bevorzugt um ein Ionischen Flüssigkeit, die aus der Menge der im Unteranspruch 12 aufgelisteten Ionischen Flüssigkeiten ausgewählt ist. Besonders bevorzugt handelt es sich dabei um eine Ionischen Flüssigkeit, die Bistrifluoromethylsulfonylimid als Anion aufweist, wie beispielsweise 1-Butyl-3-methylimidazolium bistrifluoromethylsulfonylimid ([BMIM][NTf₂]).

Im Folgenden soll die Erfindung anhand eines Ausführungsbeispiels näher erläutert werden.

Das Ausführungsbeispiel bezieht sich auf die Inertisierung von kommerziell erhältlichem Raney-Nickel sowie die Verwendung des erfindungsgemäß inertisierten Raney-Nickels zur heterogen katalysierten Hydrierung von 2,3-Dimethyl-1,3-butadien zu 2,3-Dimethyl-1-buten, 2,3-Dimethyl-2-buten und 2,3-Dimethylbutan.

Zwei Gewichtsteile Raney-Nickel, das kommerziell als Aufschlämmung mit sauerstofffreiem Wasser angeboten wird, werden in einem ersten Schritt mit drei Gewichtsteilen der Ionischen Flüssigkeit 1-Butyl-3-methylimidazolium bistrifluoromethylsulfonylimid ([BMIM][NTf₂]) gemischt. Die Ionische Flüssigkeit verdrängt das Wasser von der Oberfläche des Raney-Nickels und bildet dort eine Schicht, die den Katalysator gegenüber Sauerstoff inertisiert, dabei aber seine katalytische Aktivität nicht wesentlich beeinträchtigt. Anschließend wird das gemeinsam mit dem Raney-Nickel eingebrachte Wasser mittels eines Rotationsverdampfers bei einem auf ca. 50mbar abgesenkten Druck und bei einer Temperatur von ca. 50°C aus dem Gemisch entfernt.

Die Hydrierung von 2,3-Dimethyl-1,3-butadien wird diskontinuierlich in einem Rührkessel-Reaktor, wie z. B. in einem Hochdruckautoklaven, durchgeführt, der mit einem Gaseintragsrührer sowie einem Temperatur- und einem Drucksensor ausgestattet ist. Von dem auf die oben beschriebe Weise behandelten Raney-Nickel, das bei normalen Umgebungsbedingungen gegenüber dem Luftsauerstoff inert ist, werden 0,6g ohne Luftausschluss in den Reaktor eingewogen. Anschließend werden 200g Cyclohexan sowie 3g des Eduktes 2,3-Dimethyl-1,3-butadien zum Katalysator dazugegeben, bevor der Reaktor verschlossen wird. Nach Spülung des Gasraumes oberhalb des Flüssigkeitsspiegels mit einem Inertgas wird Wasserstoff in den Reaktor eingeleitet und der Wasserstoffdruck auf 30 bar erhöht. Vor der Inbetriebnahme des Gaseintragsrührers wird die Temperatur im Reaktor auf 100°C angehoben. Nach einer Reaktionsdauer von weniger als einer Stunde ist das 2,3-Dimethyl-1,3-butadien vollständig in die Produkte 2,3-Dimethyl-1-buten, 2,3-Dimethyl-2-buten und 2,3-Dimethylbutan umgesetzt.

Nach Beendigung der Reaktion kann das eingesetzte inertisierte Raney-Nickel an Luft von dem Cyclohexan sowie den Produkten durch Filtration abgetrennt und für mehrere Wochen an Luft gelagert werden, ohne dass es sich selbst entzündet.

Das Ausführungsbeispiel verdeutlicht, dass der mittels des erfindungsgemäßen Verfahrens erzeugte Katalysator in seiner chemischen Wirkung handelsüblichem Raney-Nickel gleichwertig ist, dabei jedoch wesentlich einfacher gehandhabt werden kann.

## Patentansprüche

1. Verfahren zur Inertisierung eines sauerstoffempfindlichen heterogenen Katalysators (s-Kat) gegen Sauerstoff, **dadurch gekennzeichnet, dass** die Oberfläche des s-Kat mit einer Ionischen Flüssigkeit benetzt wird.

2. Verfahren nach Anspruch 1, **dadurch gekennzeichnet, dass** die Benetzung der Oberfläche des s-Kat durch Aufschlämmung des s-Kats in der Ionischen Flüssigkeit erricht wird.

3. Verfahren nach einem der Ansprüche 1 oder 2, **dadurch gekennzeichnet, dass** als s-Kat ein selbstentzündlicher (pyrophorer) Katalysator eingesetzt wird.

4. Verfahren nach einem der Ansprüche 1 bis 3, **dadurch gekennzeichnet, dass** als s-Kat ein metallbasierter Katalysator eingesetzt wird.

5. Verfahren nach Anspruch 4, **dadurch gekennzeichnet, dass** als s-Kat Raney-Nickel eingesetzt wird.

6. Verfahren nach einem der Ansprüche 1 bis 5, **dadurch gekennzeichnet, dass** die Ionische Flüssigkeit aus der Menge der folgenden Ionischen Flüssigkeiten gewählt wird, für welche gilt:
das oder die Kationen sind ausgewählt aus der aus den folgenden Stoffen gebildeten Menge:
a) quarternären Ammonium-Kationen der allgemeinen Formel [NRR¹R²R³]⁺;
b) quarternäre Phosphonium-Kationen der allgemeinen Formel [PRR1 R2R3]⁺;
c) Imidazolium-Kationen der allgemeinen Formel 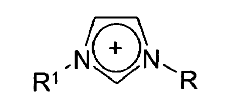 wobei der Imidazol-Kern substituiert sein kann mit wenigstens einer Gruppe, die ausgewählt ist aus C₁-C₆-Alkygruppen und/oder C₁-C₆-Alkoxygruppen und/oder C₁-C₆-Aminoalkylgruppen und/oder C₅-C₁₂-Aryl- oder C₅-C₁₂-Aryl-C₁-C₆-Alkylgruppen;
d) Pyridinium-Kationen 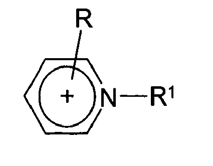 wobei der Pyridin-Kern substituiert sein kann mit wenigstens einer Gruppe, die ausgewählt ist aus C₁-C₆-Alkygruppen und/oder C₁-C₆-Alkoxygruppen und/oder C₁-C₆-Aminoalkylgruppen und/oder C₅-C₁₂-Aryl- oder C₅-C₁₂-Aryl-C₁-C₆-Alkylgruppen;
e) Pyrazolium-Kation 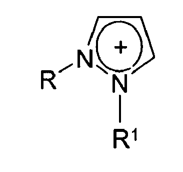 wobei der Pyrazol-Kern substituiert sein kann mit wenigstens einer Gruppe, die ausgewählt ist aus C₁-C₆-Alkygruppen und/oder C₁-C₆-Alkoxygruppen und/oder C₁-C₆-Aminoalkylgruppen und/oder C₅-C₁₂-Aryl- oder C₅-C₁₂-Aryl-C₁-C₆-Alkylgruppen;
f) Triazolium-Kation 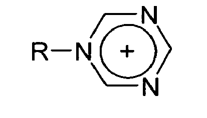 wobei der Triazol-Kern substituiert sein kann mit wenigstens einer Gruppe, die ausgewählt ist aus C₁-C₆-Alkygruppen und/oder C₁-C₆-Alkoxygruppen und/oder C₁-C₆-Aminoalkylgruppen und/oder C₅-C₁₂-Aryl- oder C₅-C₁₂-Aryl-C₁-C₆-Alkylgruppen;
und in den allgemeinen Formeln die Reste R¹, R² und R³ unabhängig voneinander ausgewählt sind aus der aus den folgenden Stoffen gebildeten Menge:
• Wasserstoff;
• lineare oder verzweigte gesättigte oder ungesättigte aliphatische oder alicyclische Alkygruppen mit 1 bis 20 Kohlenstoffatomen;
• Heteroaryl-, Heteroaryl-C₁-C₆-Alkylgruppen mit 3 bis 8 Kohlenstoffatomen im Heteroarylrest und wenigstens einem Heteroatom ausgewählt aus N, O und S, die mit wenigstens einer Gruppe ausgewählt aus C₁-C₆-Alkylgruppen und/oder Halogenatomen substituiert sein können;
• Aryl-, Aryl-C₁-C₆-Alkylgruppen mit 5 bis 12 Kohlenstoffatomen im Arylrest, die mit wenigstens einer C₁-C₆-Alkylgruppe und/oder einem Halogenatom substituiert sein können;
und in den allgemeinen Formeln der Rest R ausgewählt ist der aus den folgenden Stoffen gebildeten Menge:
• lineare oder verzweigte gesättigte oder ungesättigte aliphatische oder alicyclische Alkygruppen mit 1 bis 20 Kohlenstoffatomen;
• Heteroaryl-, Heteroaryl-C₁-C₆-Alkylgruppen mit 3 bis 8 Kohlenstoffatomen im Heteroarylrest und wenigstens einem Heteroatom ausgewählt aus N, O und S, die mit wenigstens einer Gruppe ausgewählt aus C₁-C₆-Alkylgruppen und/oder Halogenatomen substituiert sein können;
• Aryl-, Aryl-C₁-C₆-Alkylgruppen mit 5 bis 12 Kohlenstoffatomen im Arylrest, die mit wenigstens einer C₁-C₆-Alkylgruppe und/oder einem Halogenatom substituiert sein können;
und das oder die Anion sind ausgewählt aus der aus den folgenden Stoffen gebildeten Menge:
a) Tetrafluoroborat ([BF₄]⁻),
b) Tetrachloroborat ([BCl₄]⁻),
c) Hexafluorophosphat ([PF₆]⁻),
d) Hexafluoroantimonat ([SbF₆]⁻),
e) Hexafluoroarsenat ([AsF₆]⁻),
f) Sulfat ([SO₄]²⁻),
g) Carbonat ([CO₃]²⁻),
h) Fluorosulfonat,
i) [R'-COO]⁻,
j) [R'-SO₃]⁻,
k) [R'-SO₄]⁻,
l) [R'₂PO₄]⁻,
m)[Tetrakis-(3,5-bis-(trifluormethyl)-phenyl)borat] ([BARF])
und
n) [(R'-SO₂)₂N]⁻;
wobei R' ein linearer oder verzweigter 1 bis 12 Kohlenstoffatome enthaltender aliphatischer oder alicyclischer Alkylrest oder C₅-C₁₈-Arylrest oder C₅-C₁₈-Aryl-C₁-C₆-alkylrest oder C₁-C₆-Alkyl-C₅-C₁₈-arylrest ist, der durch Halogenatome oder Sauerstoffatome substituiert sein kann.

7. Verfahren nach Anspruch 6, **dadurch gekennzeichnet, dass** zur Inertisierung des s-Kats eine Ionische Flüssigkeit eingesetzt wird, die Bistrifluoromethylsulfonylimid als Anion aufweist.

8. Verfahren nach Anspruch 7, **dadurch gekennzeichnet, dass** zur Inertisierung des s-Kats die Ionische Flüssigkeit 1-Butyl-3-methylimidazolium bistrifluoromethylsulfonylimid ([BMIM][NTf₂]) eingesetzt wird.

9. Katalysator, der heterogen und gegenüber Sauerstoff unempfindlich ist, **dadurch gekennzeichnet, dass** er aus einem sauerstoffempfindlichen heterogenen Katalysator (s-Kat) bestehet, dessen Oberfläche mit einer Ionischen Flüssigkeit benetzt ist.

10. Katalysator nach Anspruch 9, **dadurch gekennzeichnet, dass** sich bei dem s-Kat um einen selbstentzündlichen (pyrophoren) Katalysator handelt.

11. Katalysator nach einem der Ansprüche 9 oder 10, **dadurch gekennzeichnet, dass** es sich bei dem s-Kat um Raney-Nickel handelt.

12. Katalysator nach einem der Ansprüche 9 bis 11, **dadurch gekennzeichnet, dass** die Ionische Flüssigkeit aus der Menge der folgenden Ionischen Flüssigkeiten gewählt ist, für die gilt:
Ionische Flüssigkeiten sind Substanzen der allgemeinen Formel aA<m+> bB<n->, wobei a und b ganze Zahlen sind und m=1 oder m=2 und n=1 oder n=2 und a*m=b*n ist
und das verwendete Kation A ausgewählt ist aus der aus den folgenden Stoffen gebildeten Menge:
a) quarternären Ammonium-Kationen der allgemeinen Formel [NRR¹R²R³]⁺;
b) quarternäre Phosphonium-Kationen der allgemeinen Formel [PRR1 R2R3]⁺;
c) Imidazolium-Kationen der allgemeinen Formel 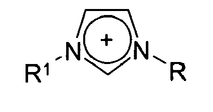 wobei der Imidazol-Kern substituiert sein kann mit wenigstens einer Gruppe, die ausgewählt ist aus C₁-C₆-Alkygruppen und/oder C₁-C₆-Alkoxygruppen und/oder C₁-C₆-Aminoalkylgruppen und/oder C₅-C₁₂-Aryl- oder C₅-C₁₂-Aryl-C₁-C₆-Alkylgruppen;
d) Pyridinium-Kationen 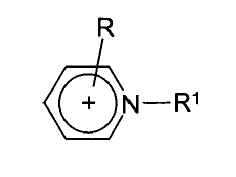 wobei der Pyridin-Kern substituiert sein kann mit wenigstens einer Gruppe, die ausgewählt ist aus C₁-C₆-Alkygruppen und/oder C₁-C₆-Alkoxygruppen und/oder C₁-C₆-Aminoalkylgruppen und/oder C₅-C₁₂-Aryl- oder C₅-C₁₂-Aryl-C₁-C₆-Alkylgruppen;
e) Pyrazolium-Kation 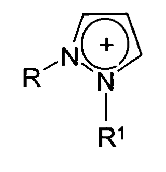 wobei der Pyrazol-Kern substituiert sein kann mit wenigstens einer Gruppe, die ausgewählt ist aus C₁-C₆-Alkygruppen und/oder C₁-C₆-Alkoxygruppen und/oder C₁-C₆-Aminoalkylgruppen und/oder C₅-C₁₂-Aryl- oder C₅-C₁₂-Aryl-C₁-C₆-Alkylgruppen;
f) Triazolium-Kation 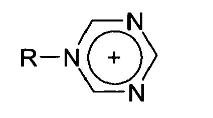 wobei der Triazol-Kern substituiert sein kann mit wenigstens einer Gruppe, die ausgewählt ist aus C₁-C₆-Alkygruppen und/oder C₁-C₆-Alkoxygruppen und/oder C₁-C₆-Aminoalkylgruppen und/oder C₅-C₁₂-Aryl- oder C₅-C₁₂-Aryl-C₁-C₆-Alkylgruppen;
und in den allgemeinen Formeln die Reste R¹, R² und R³ unabhängig voneinander ausgewählt sind aus der aus den folgenden Stoffen gebildeten Menge:
• Wasserstoff;
• lineare oder verzweigte gesättigte oder ungesättigte aliphatische oder alicyclische Alkygruppen mit 1 bis 20 Kohlenstoffatomen;
• Heteroaryl-, Heteroaryl-C₁-C₆-Alkylgruppen mit 3 bis 8 Kohlenstoffatomen im Heteroarylrest und wenigstens einem Heteroatom ausgewählt aus N, O und S, die mit wenigstens einer Gruppe ausgewählt aus C₁-C₆-Alkylgruppen und/oder Halogenatomen substituiert sein können;
• Aryl-, Aryl-C₁-C₆-Alkylgruppen mit 5 bis 12 Kohlenstoffatomen im Arylrest, die mit wenigstens einer C₁-C₆-Alkylgruppe und/oder einem Halogenatom substituiert sein können;
und in den allgemeinen Formeln der Rest R ausgewählt ist der aus den folgenden Stoffen gebildeten Menge:
• lineare oder verzweigte gesättigte oder ungesättigte aliphatische oder alicyclische Alkygruppen mit 1 bis 20 Kohlenstoffatomen;
• Heteroaryl-, Heteroaryl-C₁-C₆-Alkylgruppen mit 3 bis 8 Kohlenstoffatomen im Heteroarylrest und wenigstens einem Heteroatom ausgewählt aus N, O und S, die mit wenigstens einer Gruppe ausgewählt aus C₁-C₆-Alkylgruppen und/oder Halogenatomen substituiert sein können;
• Aryl-, Aryl-C₁-C₆-Alkylgruppen mit 5 bis 12 Kohlenstoffatomen im Arylrest, die mit wenigstens einer C₁-C₆-Alkylgruppe und/oder einem Halogenatom substituiert sein können;
und das verwendete Anion B ausgewählt ist aus der aus den folgenden Stoffen gebildeten Menge:
a) Tetrafluoroborat ([BF₄]⁻),
b) Tetrachloroborat ([BCl₄]⁻),
c) Hexafluorophosphat ([PF₆]⁻),
d) Hexafluoroantimonat ([SbF₆]⁻),
e) Hexafluoroarsenat ([AsF₆]⁻),
f) Sulfat ([SO₄]²⁻),
g) Carbonat ([CO₃]²⁻),
h) Fluorosulfonat,
i) [R'-COO]⁻,
j) [R'-SO₃]⁻,
k) [R'-SO₄]⁻,
l) [R'₂PO₄]⁻,
m) [Tetrakis-(3,5-bis-(trifluormethyl)-phenyl)borat] ([BARF])
und
n) [(R'-SO₂)₂N]⁻;
wobei R' ein linearer oder verzweigter 1 bis 12 Kohlenstoffatome enthaltender aliphatischer oder alicyclischer Alkylrest oder C₅-C₁₈-Arylrest oder C₅-C₁₈-Aryl-C₁-C₆-alkylrest oder C₁-C₆-Alkyl-C₅-C₁₈-arylrest ist, der durch Halogenatome oder Sauerstoffatome substituiert sein kann.

13. Katalysator nach Anspruch 12, **dadurch gekennzeichnet, dass** die zur Inertisierung des s-Kat eingesetzte Ionische Flüssigkeit Bistrifluoromethylsulfonylimid als Anion aufweist.

14. Katalysator nach Anspruch 13, **dadurch gekennzeichnet, dass** es sich bei der Ionischen Flüssigkeit um1-Butyl-3-methylimidazolium bistrifluoromethylsulfonylimid ([BMIM][NTf₂]) handelt.
